# EUROPÄISCHE PATENTSCHRIFT

(11) **EP 3 774 454 B1**
(45) Veröffentlichungstag und Bekanntmachung des Hinweises auf die Patenterteilung: **09.03.2022**
(21) Anmeldenummer: 19712994.3
(22) Anmeldetag: 21.03.2019
(51) Int. Cl.: B60R 21/26

(54) **AIRBAGMODUL UND AIRBAGSYSTEM**
AIRBAG MODULE AND AIRBAG SYSTEM
MODULE SAC GONFLABLE ET SYSTÈME DE SAC GONFLABLE

(30) Priorität: 29.03.2018 DE 102018204825
(43) Veröffentlichungstag der Anmeldung: 17.02.2021
(73) Patentinhaber: Vitesco Technologies GmbH, 93055 Regensburg (DE)
(72) Erfinder: BLEECK, Matthias, 93080 Pentling (DE); AUMÜLLER, Christoph, 93167 Falkenstein (DE)
(74) Vertreter: Vitesco Technologies
(86) Internationale Anmeldenummer: PCT/EP2019/057144
(87) Internationale Veröffentlichungsnummer: WO 2019/185451

(56) Entgegenhaltungen:
- WO-A1-00/21799
- WO-A1-2007/003406
- DE-A1-102012 210 943
- US-A- 5 947 514
- US-A1- 2016 339 865

## Beschreibung

Die Erfindung betrifft ein Airbagmodul sowie ein Airbagsystem, die für gewöhnlich in Kraftfahrzeugen Teil eines Insassenrückhaltesystems bilden.

Airbagsysteme bilden heutzutage gemeinsam mit Sicherheitsgurten die wichtigsten passiven Sicherheitselemente eines Insassenrückhaltesystems in einem Kraftfahrzeug, das schwerwiegenden Verletzungen bei einem Aufprall des Kraftfahrzeuges auf ein Hindernis entgegenwirken soll.

Airbagsysteme weisen zumeist mehrere Airbagmodule auf, die jeweils wenigstens einen Airbagsack umfassen, der, wenn es zu einem Aufprall kommt, mit einem Airbaggas befüllt wird. Dabei entfaltet sich der Airbagsack innerhalb eines kurzen Zeitbereichs zwischen 10 ms und 50 ms zwischen einem Insassen und Teilen eines Innenraumes des Kraftfahrzeuges und bildet ein Kissen. Dadurch wird verhindert, dass der Insasse gegen harte Teile des Innenraumes wie beispielsweise ein Lenkrad oder Armaturenbrett prallt.

Das Airbaggas wird in dem Gasgenerator mit einem Hochdruck zwischen 50 bar und 1000 bar bereitgestellt. Bei dem Gasgenerator kann es sich um einen Heißgasgenerator (pyrotechnischer Gasgenerator), einen Kaltgasgenerator oder auch um einen Hybridgasgenerator handeln.

Airbagsysteme weisen weiter wenigstens einen Sensor auf, der im Falle eines Aufpralls einen Aufprallzeitpunkt to detektiert. Nach einer gewissen Zeit (ms-Bereich) nach diesem Aufprallzeitpunkt to wird die Airbagauslösung gestartet. Dazu weisen die Airbagmodule einen Gasgenerator auf, der das Airbaggas, mit dem der Airbagsack befüllt werden soll, bereitstellt. Das Airbaggas kann beispielsweise durch Zündung eines Festtreibstoffes, der bei Verbrennung das Airbaggas freisetzt, oder durch unter Hochdruck gespeichertes Gas bereitgestellt werden. Das Airbaggas aus dem Gasgenerator strömt in den Airbagsack, füllt diesen und sorgt für seine Entfaltung.

Derzeit löst das Airbagsystem kurz nach dem Aufprallzeitpunkt to aus, d. h. erst wenn der Aufprall bereits erfolgt ist. Bei zukünftigen Airbagsystemen ist es jedoch geplant, durch geeignete Sensoren und Auswertung deren Signale einen Zeitpunkt tₙ zu erkennen, bei dem ein Aufprall unvermeidbar ist. Dieser Zeitpunkt tₙ liegt in der sog. Pre-Crash-Phase vor dem eigentlichen Zeitpunkt to des Aufpralls. Es ist geplant, mit dieser Information das Airbagsystem bereits vor dem Aufprall zu aktivieren, um so die Insassen eines Fahrzeuges noch besser vor Verletzungen schützen zu können.

Bislang ist geplant, hierzu zweistufige Airbagmodule zu verwenden, bei denen zwei Gasgeneratoren vorgesehen sind, die zeitversetzt ausgelöst werden. Hier wird in zwei aufeinanderfolgenden Phasen je ein konstanter Massestrom m an Airbaggas in den Airbagsack eingeleitet.

Ein Airbagmodul gemäß dem Oberbegriff des Anspruchs 1 ist aus der Offenlegungsschrift DE 10 2012 210943 A1 bekannt. Ein weiteres Airbagmodul ist aus der Offenlegungsschrift WO 00/21799A1 bekannt.

Aufgabe der Erfindung ist es, ein alteratives Airbagmodul für ein Airbagsystem vorzuschlagen.

Diese Aufgabe wird mit einem Airbagmodul mit der Merkmalskombination des Anspruches 1 gelöst.

Ein Airbagsystem, das ein solches Airbagmodul aufweist, ist Gegenstand des nebengeordneten Anspruches.

Vorteilhafte Ausgestaltungen der Erfindung sind Gegenstand der abhängigen Ansprüche.

Ein Airbagmodul weist einen Airbagsack, der im Betrieb mit einem druckbeaufschlagten Airbaggas befüllt wird, und einen Gasgenerator zum Bereitstellen des druckbeaufschlagten Airbaggases für den Airbagsack auf. Weiter weist das Airbagmodul eine Gaszuführung zwischen Gasgenerator und Airbagsack zum Zuführen des bereitgestellten druckbeaufschlagten Airbaggases von dem Gasgenerator in den Airbagsack auf. In der Gaszuführung ist eine Ventilanordnung zum Freigeben eines vordefinierten Massestroms m des druckbeaufschlagten Airbaggases aus dem Gasgenerator angeordnet.

Der Massestrom m des Airbaggases ist dabei definiert durch die Masse, die pro Zeiteinheit zu dem Airbagsack hinströmt (m/t).

Die Ventilanordnung weist ein elektrisch ansteuerbares Pilotventil zum Steuern des vordefinierten Massestroms m des Airbaggases und eine hydraulische Übersetzungsanordnung zur Vergrößerung einer Hubwirkung des Pilotventils auf.

Dadurch, dass in der Gaszuführung zwischen dem Gasgenerator und dem Airbagsack eine gezielt elektrisch ansteuerbare Ventilanordnung vorgesehen ist, ist es möglich, die Füllung des Airbagsackes mit dem Airbaggas gezielt einem Aufprallverlauf anpassen zu können. Um einen optimalen Füllverlauf des Airbagsackes durchführen zu können, z. B. indem der Airbagsack bereits vor dem erwarteten Aufprall vollgefüllt und später noch nachgefüllt wird, ist eine Steuerung des Massestroms m des Airbaggases aus dem Gasgenerator erforderlich. Mit den bisher bekannten Airbagsystemen, bei denen zwei Gasgeneratoren zeitversetzt ausgelöst werden, ist es nur möglich, einen konstanten Massestrom m in dem Airbagsack zu erzeugen, eine gezielte Steuerung des Massestroms m ist jedoch nicht möglich. Dadurch, dass nur die Ventilanordnung mit dem elektrisch ansteuerbaren Pilotventil vorgesehen ist, kann zu jedem Zeitpunkt vor, während und nach dem Aufprall der Massestrom m über die Ventilanordnung gezielt gesteuert und somit die Befüllung des Airbagsackes zu jedem Zeitpunkt geregelt werden. So ist es möglich, die Füllung des Airbagsackes gezielt an den Aufprallverlauf anpassen zu können.

Grundsätzlich wäre es beispielsweise bereits möglich, über ein einzelnes elektrisch ansteuerbares Ventil wie beispielsweise ein Magnetventil ein aktives Steuern der Befüllung des Airbagsackes zu ermöglichen. Wird jedoch ein Magnetventil verwendet, bewirkt die Größe und das Gewicht des verwendeten Magneten eine gewisse Trägheit des Systems und nimmt auch relativ viel Bauraum ein. Daher wird vorliegend lediglich ein kleines elektrisch ansteuerbares Pilotventil verwendet, das beispielsweise als Magnetventil ausgebildet sein kann. Hier ist nur ein kleiner Magnet notwendig, da zusätzlich zu dem Pilotventil selbst, das die eigentliche Steuerung des Massestroms m übernimmt, eine hydraulische Übersetzungsanordnung vorgesehen ist, die den eigentlichen Hub des Pilotventils vervielfacht. Dadurch ist es nicht nötig, einen sehr großen Magneten zu verwenden, sondern die gewünschte Masse wird durch die hydraulische Übersetzungsanordnung eingestellt, während die eigentliche Steuerung des Massestromes m über das elektrisch ansteuerbare Pilotventil erfolgt.

Die hydraulische Übersetzungsanordnung weist einen Steuerraum auf, der fluidisch über eine Verbindungsbohrung und über eine getrennt von der Verbindungsbohrung angeordnete Drosselbohrung mit dem Gasgenerator verbunden ist. Weiter ist der steuerraum fluidisch über eine Ablaufbohrung mit dem Airbagsack verbunden. In dem Steuerraum ist ein Schließelement zum Verschließen und Freigeben eines Ventilsitzes in der Verbindungsbohrung oder in der Ablaufbohrung angeordnet. Das Schließelement ist dabei als Trennelement ausgebildet, das den Steuerraum in einen ersten Steuerraumbereich und in einem von dem ersten Steuerraumbereich getrennten zweiten Steuerraumbereich unterteilt.

Das Schließelement ist als Trennelement zwischen dem ersten Steuerraumbereich und dem zweiten Steuerraumbereich angeordnet. Das bedeutet, dass ein statischer Fluiddruck sowohl von der Seite des ersten Steuerraumbereiches als auch von der Seite des zweiten Steuerraumbereiches auf das Schließelement wirkt. Ist das System druckausgeglichen, bewegt sich das Schließelement nicht, sondern bleibt in seiner Ausgangsposition stehen. Wirkt jedoch von der Seite des ersten Steuerraumbereiches ein anderer Druck als von der Seite des zweiten Steuerraumbereiches, bewegt sich das Schließelement - je nach Anordnung der beiden Steuerraumbereiche - in eine Öffnungs- bzw. Schließposition. In der Öffnungsposition gibt es die Gaszuführung frei, so dass Airbaggas von dem Gasgenerator in den Airbagsack strömen kann. In der Schließposition verschließt es jedoch die Gaszuführung, so dass kein Airbaggas von dem Gasgenerator in den Airbagsack strömt.

Der von der Seite des ersten Steuerraumbereiches herrschende Fluiddruck wird durch das Pilotventil gesteuert. Dieses weist ein Pilotventilschließelement auf, das eine Zulaufbohrung zu dem Pilotventil verschließt. Über die Zulaufbohrung ist das Pilotventil vorteilhaft fluidisch mit dem Steuerraum verbunden, und zwar insbesondere mit dem ersten Steuerraumbereich. Öffnet sich das Pilotventil, kann Airbaggas aus dem ersten Steuerraumbereich über das Pilotventil abfließen, der Fluiddruck in dem ersten Steuerraumbereich sinkt, und ein Fluiddruck, der von dem zweiten Steuerraumbereich her auf das Schließelement wirkt, wird größer als der Fluiddruck, der von dem ersten Steuerraumbereich her auf das Schließelement wirkt. Das Schließelement verändert daher seine Position, insbesondere bewegt es sich in eine Öffnungsposition, und Airbaggas fließt von dem Gasgenerator in den Airbagsack.

Das Pilotventil weist eine Ablaufbohrung auf, die eine fluidische Verbindung des Pilotventiles mit dem Airbagsack bildet. So fließt Airbaggas auch aus dem ersten Steuerraumbereich über die Zulaufbohrung und die Ablaufbohrung des Pilotventiles zu dem Airbagsack.

Vorteilhaft verbindet die Drosselbohrung fluidisch den ersten Steuerraumbereich mit dem Gasgenerator, wobei das Pilotventil zum Steuern eines Fluiddruckes des Airbaggases in dem ersten Steuerraumbereich ausgebildet ist.

Die Verbindungsbohrung, die den Gasgenerator mit dem Steuerraumbereich verbindet, verbindet den Gasgenerator insbesondere mit dem zweiten Steuerraumbereich.

Das Schließelement ist vorteilhaft so ausgebildet, dass eine erste Druckwirkfläche auf das Schließelement von einer Seite des ersten Steuerraumbereiches größer ist als eine zweite Druckwirkfläche von einer Seite der Verbindungsbohrung, in der der Ventilsitz gebildet ist, oder von einer Seite der Ablaufbohrung, in der der Ventilsitz gebildet ist.

Das Schließelement kann demgemäß so ausgebildet sein, dass es, wenn es sich in dem Ventilsitz befindet, die Ablaufbohrung zu dem Airbagsack hin verschließt, oder dass es die Verbindungsbohrung zwischen Steuerraum und Gasgenerator verschließt.

Vorzugsweise ist das Schließelement als Kugel ausgebildet, es ist jedoch auch möglich, das Schließelement beispielsweise als Kegel auszubilden. Wichtig hierbei ist nur, dass sich die Druckwirkflächen von der Seite des ersten Steuerraumbereiches und von der Seite des zweiten Steuerraumbereiches unterscheiden, so dass eine Bewegung des Schließelementes durch eine Druckänderung in den beiden Steuerraumbereichen induziert werden kann.

Über einen Durchmesser der Drosselbohrung ist es möglich, den in dem ersten Steuerraumbereich herrschenden Fluiddruck im Vergleich zu dem in dem zweiten Steuerraumbereich herrschenden Fluiddruck einzustellen. Es ist daher möglich, den Fluiddruck, der in dem ersten Steuerraumbereich herrscht, knapp unterhalb einem Schaltdruck, d. h. dem Zustand der Ventilanordnung, bei dem sich das Schließelement zu bewegen beginnt, oder knapp oberhalb des Schaltdruckes zu halten. Auch der Durchmesser der Zulaufbohrung zu dem Pilotventil kann in dieser Hinsicht angepasst werden, um einen Einfluss auf den herrschenden Fluiddruck zu bewirken.

Vorzugsweise ist das Pilotventil als stromlos geschlossenes Pilotventil ausgebildet und weist eine Druckfeder auf, die ein Pilotventilelement in eine Schließposition auf einen Pilotventilsitz in der Zulaufbohrung vorspannt, wobei die Druckfeder einen Öffnungsdruck des Pilotventils insbesondere derart festlegt, dass der Öffnungsdruck größer ist als ein durch die Aktivierung des Gasgenerators im Gasgenerator herrschender Hochdruck des Airbaggases. So kann vorteilhaft vermieden werden, dass das Pilotventil ungewollt öffnet und somit die gesamte Ventilanordnung aktiviert.

Alternativ ist es jedoch auch möglich, dass das Pilotventil als stromlos offenes Pilotventil ausgebildet ist. Dann wird durch Bestromung das Pilotventil aktiv geschlossen gehalten und nur durch Wegnahme des Stromes geöffnet. Vorteilhaft ist dazu eine Druckfeder vorgesehen, die das Pilotventil in eine definierte Öffnungsposition vorspannt.

Ein Airbagsystem weist ein Airbagmodul wie oben beschrieben und weiter eine Steuereinrichtung zum Ansteuern des Pilotventils auf, wobei die Steuereinrichtung dazu ausgelegt ist, einen Aufprallverlauf zu erkennen und basierend auf dem erkannten Aufprallverlauf einen dem Airbagsack zuzuführenden Massestrom m des Airbaggases zu definieren.

Vorteilhaft weist das Airbagsystem weiter wenigstens einen Sensor auf, der zeitlich vor einem Aufprall Parameter zum Berechnen eines voraussichtlichen Aufprallverlaufes erfasst und an die Steuereinrichtung überträgt.

Vorzugsweise ist die Steuereinrichtung dazu ausgelegt, aus den erfassten Parametern den voraussichtlichen Aufprallverlauf und darauf basierend die zu jedem Zeitpunkt des Aufprallverlaufes benötigte Masse des Airbaggases in dem Airbagsack zu definieren.

Über die erfassten Parameter des Sensors ist es daher möglich, zu erkennen, wann ein Aufprall unvermeidbar ist, wann beispielsweise der Aufprallzeitpunkt tₙ vorliegt, welche Kräfte beim Aufprall voraussichtlich wirken, und daraus zu schließen, in welchem Maße der Airbagsack aufgeblasen sein muss, um Verletzungen des Insassen zu vermeiden.

Dazu ist es vorteilhaft, wenn nicht nur eine Geschwindigkeit des Fahrzeuges und ein Abstand zu einem Hindernis erfasst wird, sondern auch die Eigenschaften von Insassen, wie beispielsweise Größe und Gewicht, so dass die Aktivierung des Airbagsackes von Insassenparametern durchgeführt werden kann.

Beispielsweise ist die Steuereinrichtung dazu ausgelegt, das Pilotventil derart anzusteuern, dass das Pilotventil mehrere definierte Teilmassen der benötigten Masse des Airbaggases zu unterschiedlichen Zeitpunkten des Aufprallverlaufes aus dem Gasgenerator freigibt. Beispielsweise kann das Pilotventil eine Teilmasse bereits vor dem erwarteten Aufprall in den Airbagsack freigeben, so dass dieser bereits vorbefüllt ist. Weiter ist es auch möglich, während des Aufpralls den Airbagsack mit einer weiteren Teilmasse zu füllen und auch nach dem eigentlichen Aufprall, wenn der Insasse aufgrund der Masseträgheit verzögert auf die negative Beschleunigung reagiert, den Airbagsack mit einer weiteren Teilmasse nachzufüllen.

Vorteilhafte Ausgestaltungen der Erfindung werden nachfolgend anhand der beigefügten Zeichnungen näher erläutert. Darin zeigt:
- Fig. 1: eine schematische Draufsicht auf ein Kraftfahrzeug, dass sich entlang einer Zeitachse t einem Hindernis nähert;
- Fig. 2: eine Momentaufnahme zu einem Aufprallzeitpunkt to des Fahrzeuges aus Fig. 1 auf das Hindernis, wenn ein Airbagmodul in einem Innenraum des Fahrzeuges aktiviert wird;
- Fig. 3: eine schematische Längsschnittdarstellung einer ersten Ausführungsform des Airbagmoduls aus Fig. 2 mit einer Ventilanordnung, bei der ein Pilotventil als stromlos geschlossenes Pilotventil ausgebildet ist;
- Fig. 4: eine Detaildarstellung einer hydraulischen Übersetzungsanordnung für das Pilotventil aus Fig. 3;
- Fig. 5: eine schematische Längsschnittdarstellung der Ventilanordnung aus Fig. 3, wobei das Pilotventil als stromlos offenes Pilotventil ausgebildet ist;
- Fig. 6: eine schematische Längsschnittdarstellung einer zweiten Ausführungsform des Airbagmoduls aus Fig. 2 mit einer Ventilanordnung, bei der ein Pilotventil als stromlos geschlossenes Pilotventil ausgebildet ist;
- Fig. 7: eine Detaildarstellung einer hydraulischen Übersetzungsanordnung für das Pilotventil aus Fig. 6; und
- Fig. 8: eine schematische Längsschnittdarstellung der Ventilanordnung aus Fig. 6, wobei das Pilotventil als stromlos offenes Pilotventil ausgebildet ist.

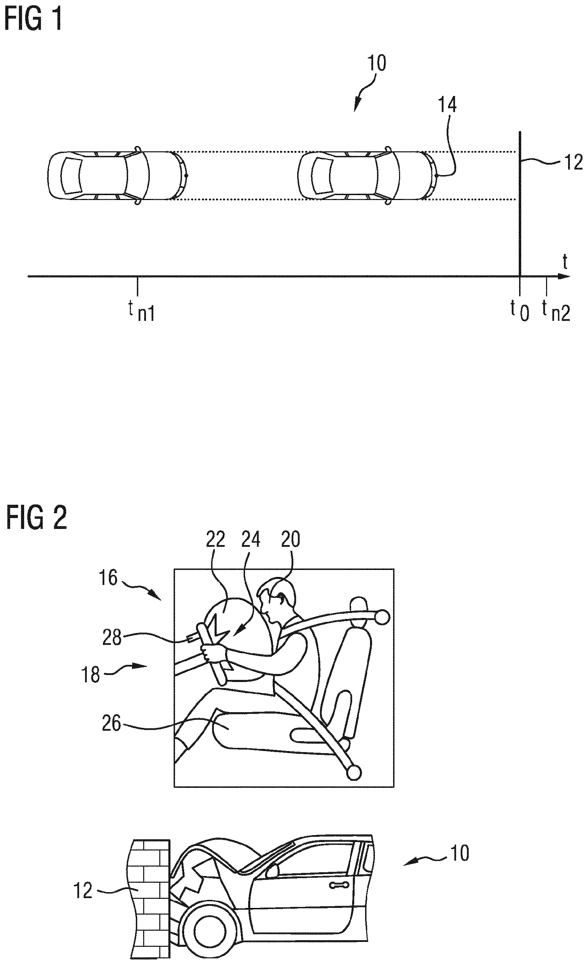

Fig. 1 zeigt eine schematische Draufsicht auf ein Kraftfahrzeug 10, das sich einem Hindernis 12 nähert, auf das es mit hoher Wahrscheinlichkeit aufprallen wird. Der Näherungsvorgang ist zeitlich anhand einer Zeitachse mit einem Zeitverlauf t dargestellt, wobei to einen Aufprallzeitpunkt definiert, d. h. den Zeitpunkt, zu dem sich das Kraftfahrzeug 10 und das Hindernis 12 berühren.

Das Kraftfahrzeug 10 weist einen Sensor 14 auf, der eine Geschwindigkeit des Kraftfahrzeuges 10 und eine Entfernung zu dem Hindernis 12 erfasst. Die Geschwindigkeit und die Entfernung sind Parameter, die zeitlich vor dem voraussichtlichen Aufprall erfasst werden, und aus denen es möglich ist, einen voraussichtlich Aufprallverlauf zu berechnen.

Fig. 2 zeigt eine Innen- (oben) und eine Außenansicht (unten) des Kraftfahrzeuges 10 aus Fig. 1 als Momentaufnahme zum Zeitpunkt to des Aufpralles.

In der Innenansicht ist eine Momentaufnahme einer Aktivierung eines Airbagmodules 16 eines Airbagsystems 18 in dem Kraftfahrzeug 10 zu sehen, wenn, wie in der Außenansicht des Kraftfahrzeuges 10 dargestellt ist, das Kraftfahrzeug 10 auf das Hindernis 12 aufgeprallt ist.

Um einen Insassen 20 in dem Kraftfahrzeug 10 vor Verletzungen zu schützen, wird ein Airbagsack 22 des Airbagmoduls 16 mit einem Airbaggas 24 befüllt, entfaltet sich dadurch und trennt den Insassen 20 von harten Teilen des Kraftfahrzeuges 10. Dadurch können Verletzungen des Insassen 20 vermieden werden.

In dem Kraftfahrzeug 10 ist ein weiterer Sensor 26 angeordnet, der Eigenschaften des Insassen 20 erfasst, wie beispielsweise seine Größe und sein Gewicht.

Auf Basis der Parameter, die die Sensoren 14, 26 erfassen, ist es möglich, einen Aufprallverlauf des unvermeidbaren Aufpralles vorauszuberechnen, und zu ermitteln, zu welchen vorbestimmten Zeitpunkten tₙ der Airbagsack 22 wie stark aufgeblasen sein muss, um den Insassen 20 maximal schützen zu können.

Eine Steuereinrichtung 28 erfasst dazu Signale der Sensoren 14, 26 und ermittelt aus diesen Signalen den voraussichtlichen Aufprallverlauf. Dadurch kann die Steuereinrichtung 28 definieren, welcher Massestrom m des Airbaggases 24 zu dem Airbagsack 22 zugeführt werden muss.

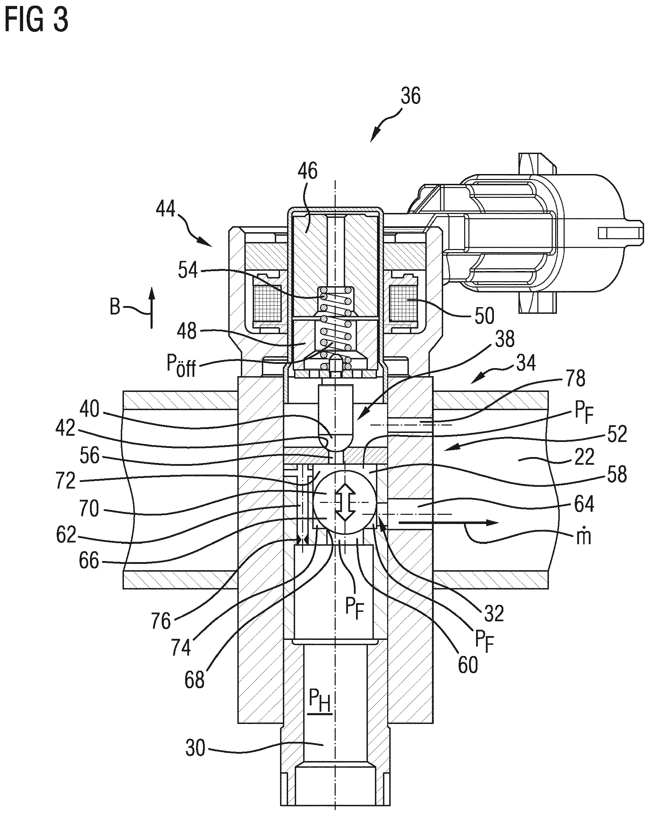

Damit der Airbagsack 22 gezielt entsprechend des vorhergesagten Aufprallverlaufes gefüllt werden kann, ist ein spezielles, in den Figs. 3 bis 8 in schematischer Längsschnittdarstellung gezeigtes Airbagmodul 16 vorgesehen.

Zunächst wird mit Bezug auf Fig. 3 eine erste Ausführungsform des Airbagmodules 16 beschrieben. Das Airbagmodul 16 weist neben dem Airbagsack 22 einen Gasgenerator 30 auf, der das Airbaggas 24 für den Airbagsack 22 bereitstellt. Hierbei besteht die Möglichkeit, dass das Airbaggas 24 über einen Kaltgasgenerator zur Verfügung gestellt wird und somit von Anfang an in gasförmiger Form vorliegt. Es ist jedoch auch möglich, dass ein pyrotechnischer Gasgenerator 30 verwendet wird, wobei sich in dem Gasgenerator 30 ein Festtreibstoff befindet, der zunächst entzündet wird, um das Airbaggas 24 im benötigten Fall freizusetzen.

Zwischen dem Airbagsack 22 und dem Gasgenerator 28 ist eine Gaszuführung 32 angeordnet, über die das Airbaggas 24 von dem Gasgenerator 30 zu dem Airbagsack 22 geleitet werden kann.

In der Gaszuführung 32 ist eine Ventilanordnung 34 angeordnet, die ein elektrisch ansteuerbares Pilotventil 36 aufweist, das gezielt so über die Steuereinrichtung 28 ansteuerbar ist, dass die Gaszuführung 32 gezielt geöffnet bzw. verschlossen werden kann. So kann ein von dem Gasgenerator 30 zu dem Airbagsack 22 zugeführter Massestrom m des Airbaggases 24 gezielt und vordefiniert gesteuert werden.

Das Pilotventil 36 weist einen Ventilbereich 38 auf, bei dem ein Pilotventilelement 40 mit einem Pilotventilsitz 42 zusammenwirkt, um das Pilotventil 36 in einer Schließposition zu halten.

Das Pilotventil 36 weist weiter einen Aktorbereich 44 auf, der in einem elektrisch angesteuerten Zustand eine Bewegungskraft B auf das Pilotventilelement 40 ausübt, so dass sich das Pilotventilelement 40 zwischen seiner Schließposition und seiner Öffnungsposition bewegt.

Der Aktorbereich 44 weist magnetische Elemente wie ein feststehendes Polstück 46 und einen beweglichen Anker 48 auf, wobei der Anker 48 mit dem Pilotventilelement 40 gekoppelt ist. Dadurch überträgt der Anker 48 seine Bewegung auf das Pilotventilelement 40. Um die Bewegung des Ankers 48 zu induzieren, umfasst der Aktorbereich 44 eine Spule 50, die hierfür bestromt wird.

Die Spule 50 bildet mit den magnetischen Elementen des Pilotventiles 36 einen Magneten aus.

Normalerweise würde es ausreichen, wenn das Pilotventilelement 40 den Gasgenerator 30 verschließt, so dass durch einfaches Öffnen und Schließen des Pilotventilelementes 40 ein Massestrom ṁ von dem Gasgenerator 30 zu dem Airbagsack 22 geregelt werden kann.

Hierzu ist jedoch ein relativ großer Magnet nötig, der einen relativ großen Bauraum in dem Airbagmodul 16 benötigt und außerdem auch verhältnismäßig träge ist.

Daher wird nun in den nachfolgend beschriebenen Ausführungsformen vorgeschlagen, zwischen dem Gasgenerator 30 und dem Pilotventil 36 eine hydraulische Übersetzung 52 zwischenzuschalten, die einen Hub des Pilotventilelementes 40 verstärkt. Dadurch kann das Pilotventil 36 und somit auch die Magnetanordnung deutlich kleiner ausgebildet sein, benötigt daher weniger Bauraum und kann sehr schnell schalten.

Das Pilotventil 36 in Fig. 3 ist als stromlos geschlossenes Pilotventil 36 ausgebildet, d. h., im unbestromten Zustand befindet sich das Pilotventilelement 40 in seiner Schließposition. Dazu wird es von einer Druckfeder 54 in Richtung auf die Schließposition vorgespannt. In der Schließposition verschließt das Pilotventilelement 40 eine Zulaufbohrung 56 zu dem Pilotventil 36, wobei die Zulaufbohrung 56 die Verbindung des Pilotventiles 36 zu der hydraulischen Übersetzungsanordnung 52 bildet.

Die hydraulische Übersetzungsanordnung 52 ist gebildet aus einem Steuerraum 58, der fluidisch sowohl über eine Verbindungsbohrung 60 als auch über eine Drosselbohrung 62 mit dem Gasgenerator 30 verbunden ist. Die Verbindungsbohrung 60 und die Drosselbohrung 62 sind getrennt voneinander angeordnete Bohrungen, die an unterschiedlichen Positionen in den Steuerraum 58 bzw. in den Gasgenerator 30 münden. Der Steuerraum 58 ist über die Zulaufbohrung 56 auch fluidisch mit dem Pilotventil 36 verbunden. Weiter ist der Steuerraum 58 fluidisch über eine Ablaufbohrung 64 mit dem Airbagsack 22 verbunden. In dem Steuerraum 58 ist ein Schließelement 66 angeordnet, das einen Ventilsitz 68 verschließt, der in der gezeigten ersten Ausführungsform in der Verbindungsbohrung 60 angeordnet ist. Das Schließelement 66 ist als Trennelement 70 ausgebildet und unterteilt den Steuerraum 58 in einen ersten Steuerraumbereich 52 und einen zweiten Steuerraumbereich 74, wobei die beiden Steuerraumbereiche 72, 74 getrennt voneinander sind. Das Trennelement 70 trennt die beiden Steuerraumbereiche 72, 74 fluidisch voneinander ab, ist aber dennoch innerhalb des Steuerraumes 58 beweglich angeordnet.

Die Drosselbohrung 62 weist eine Blende 76 auf und verbindet den Gasgenerator 30 fluidisch mit dem ersten Steuerraumbereich 72. Auch das Pilotventil 36 ist über die Zulaufbohrung 56 mit dem ersten Steuerraumbereich 72 fluidisch verbunden.

Die Verbindungsbohrung 60 verbindet den Gasgenerator 30 fluidisch mit dem zweiten Steuerraumbereich 74.

Das Schließelement 66 ist in der vorliegenden Ausführungsform als Kugel ausgebildet, auf die sowohl von der Seite des ersten Steuerraumbereiches 72 als auch von der Seite des zweiten Steuerraumbereiches 74 ein Fluiddruck P_{F} des in dem jeweiligen Steuerraumbereich 72, 74 vorhandenen Airbaggases 24 wirkt.

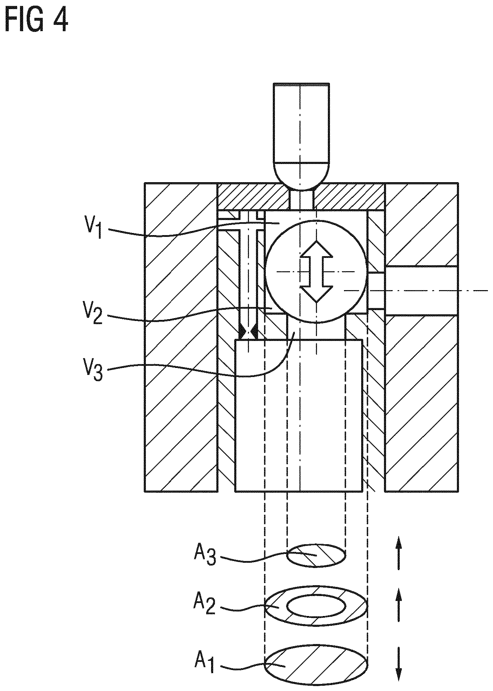

Dies ist in einer Detaildarstellung in Fig. 4 gezeigt. Der erste Steuerraumbereich 72 bildet dabei ein erstes Volumen V₁, in dem das Airbaggas 24 auf die obere Fläche des Schließelementes 66 wirkt. Dadurch entsteht eine relativ große erste Druckwirkfläche A₁ auf das Schließelement 66 von Seite des ersten Steuerraumbereiches 72 her.

Der zweite Steuerraumbereich 74 bildet ein zweites Volumen V₂ mit einer entsprechenden zweiten Druckwirkfläche A₂, die von Seite des zweiten Steuerraumbereiches 74 auf das Schließelement 66 von unten wirkt. Zusätzlich bildet der Bereich in der Verbindungsbohrung 60, die mit dem Schließelement 66 verschlossen wird, ein drittes Volumen V₃ mit einer entsprechenden dritten Druckwirkfläche A₃ von unten auf das Schließelement 66.

Die zweite und dritte Druckwirkfläche A₂ und A₃ addieren sich und wirken entgegen der ersten Druckwirkfläche A₁.

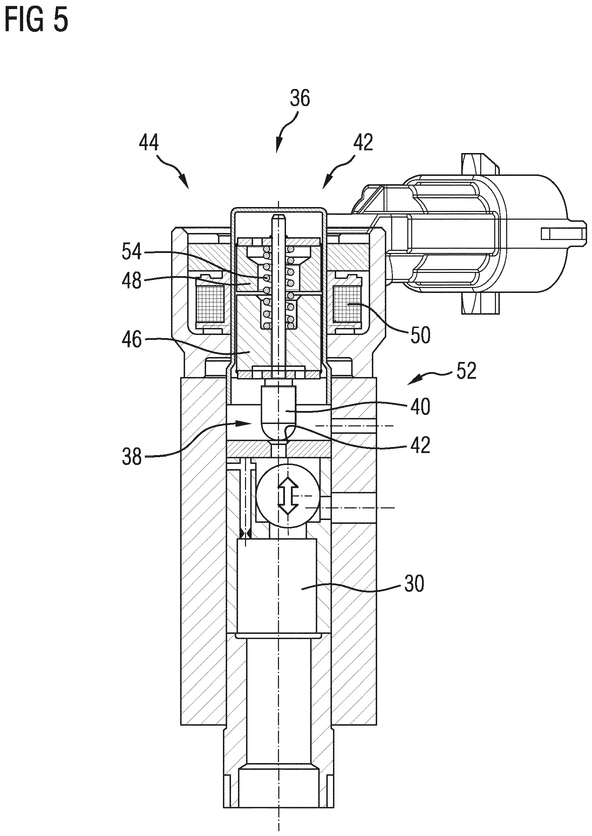

Die Wirkung der Ventilanordnung 34, die in der ersten Ausführungsform in Fig. 3 und Fig. 4 gezeigt ist, ist wie folgt:
Die hydraulische Übersetzungsanordnung 52 weist das bewegliche Schließelement 66 in Form einer Kugel auf und wird durch das Pilotventil 36 angesteuert. Das Pilotventil 36 kann, wie in Fig. 3 gezeigt, stromlos geschlossen sein, es ist jedoch auch möglich, das Pilotventil 36, wie in Fig. 5 gezeigt, als stromlos offenes Pilotventil 36 vorzusehen. Die Wahl des Typs des Pilotventiles 36 ist abhängig vom Sicherheitskonzept des Airbagsystems 18.

Bei der stromlos geschlossenen Variante in Fig. 3 verschließt das Pilotventil 36 ohne Strombeaufschlagung der Spule 50 mit dem Pilotventilelement 40 die Zulaufbohrung 56 durch die Druckfeder 54. Die Druckfeder 54 ist in einem Bereich zwischen dem Anker 48 und dem Polstück 46 eingespannt. Bei einer Strombeaufschlagung der Spule 50 wird ein Magnetfeld und dadurch eine Magnetkraft zwischen dem Anker 48 und dem Polstück 46 erzeugt, die gegen die Kraft der Druckfeder 54 wirkt. Zu dem Zeitpunkt, zu dem die Kraft der Druckfeder 54 von der Magnetkraft zwischen dem beweglichen Anker 48 und dem feststehenden Polstück 46 überwunden wird, schaltet das Pilotventil 36. Der Abstand zwischen dem beweglichen Anker 48 und dem feststehenden Polstück 46 wird verringert und das Pilotventilelement 40 gibt den Querschnitt der Zulaufbohrung 56 frei. Dadurch kann das Airbaggas 24 durch die Zulaufbohrung 56 fließen. Das Airbaggas 24 wird über eine Ablaufbohrung 78 des Pilotventiles 36 zu dem Airbagsack 22 abgeleitet.

Die hydraulische Übersetzungsanordnung 52 ist als Sitzventil ausgeführt. Das bedeutet, dass das Schließelement 66 den Ventilsitz 68 verschließt. Der Durchmesser des Ventilsitzes 68 ist kleiner als der Durchmesser des Schließelementes 66, da dieses als Kugel ausgebildet ist. Die dritte Druckwirkfläche A₃ im Bereich der Verbindungsbohrung 60 wird durch den Durchmesser des Ventilsitzes 68 gebildet. Die erste Druckwirkfläche A₁ im ersten Steuerraumbereich 72 wird durch den Außendurchmesser des Schließelementes 66 bestimmt. Die erste Druckwirkfläche A₁ im ersten Steuerraumbereich 72 ist größer als die dritte Druckwirkfläche A₃ am Ventilsitz 68. Wird daher das Schließelement 66 von beiden Seiten mit dem gleichen Fluiddruck P_{F} beaufschlagt, wirkt vom ersten Steuerraumbereich 72 durch die größere erste Druckwirkfläche A₁ eine größere Kraft als aus dem Bereich des Ventilsitzes 68 entgegen. Dadurch schließt das Schließelement 66 und liegt an dem Ventilsitz 68 an.

Nach Aktivierung des Gasgenerators 30 steigt der Fluiddruck P_{F} in der Verbindungsbohrung 60. Der Fluiddruck P_{F} steht damit im Bereich des Ventilsitzes 68 an dem Schließelement 66 an. Das Pilotventil 36 in der stromlos geschlossenen Variante ist geschlossen. Durch den Staudruck kann Airbaggas 24 durch die Blende 76 in den ersten Steuerraumbereich 72 fließen. Nach kurzer Zeit hat sich der Fluiddruck P_{F} in dem ersten Steuerraumbereich 72 mit dem Fluiddruck P_{F} im Bereich des Ventilsitzes 68 ausgeglichen. Das Schließelement 66 verschließt weiterhin die Verbindungsbohrung 60.

Um eine Gasmenge des Airbaggases 24 zu der Ablaufbohrung 64 und somit zu dem Airbagsack 22 zuzudosieren, wird das Pilotventil 36 mit Strom beaufschlagt, wodurch das Pilotventil 36 die Zulaufbohrung 56 freigibt. Dadurch fällt der Fluiddruck P_{F} in dem ersten Steuerraumbereich 52 ab, das Schließelement 66 schaltet und gibt den Querschnitt im Bereich des Ventilsitzes 68 zu der Ablaufbohrung 64 hin frei. Die Masseströme m aus der Ablaufbohrung 64 und der Ablaufbohrung 78 werden gesammelt und zu dem Airbagsack 22 zugeführt.

Um den Massestrom m des Airbaggases 24 zu dem Airbagsack 22 zu stoppen, wird das Pilotventil 36 wieder geschlossen.

Durch die Ansteuerung des Pilotventils 36 kann einmalig oder auch wiederholt eine Gasmenge des Airbaggases 24 dem Airbagsack 22 zugeführt werden.

In Fig. 4 sind in der Detaildarstellung die Flächenverhältnisse der Druckwirkflächen A₁, A₂ und A₃ entsprechend zu den Volumina V₁, V₂, V₃ in den unterschiedlichen Bereichen des Steuerraumes 58 dargestellt. In der Verbindungsbohrung 60 aus dem Gasgenerator 30 wirkt die dritte Druckwirkfläche A₃ innerhalb des Sitzdurchmessers des Ventilsitzes 68 auf das Schließelement 66. In dem zweiten Steuerraumbereich 74, d. h. in dem zweiten Volumen V₂, wirkt ein Druck aus der Ablaufbohrung 64 zu dem Aibagsack 22 bzw. aus dem Airbagsack 22 auf die untere zweite Druckwirkfläche A₂ des Schließelementes 66. Die zweite Druckwirkfläche A₂ befindet sich zwischen dem Außendurchmesser des Schließelementes 66 und dem Sitzdurchmesser des Ventilsitzes 68. Der Druck in diesem Bereich ist sehr viel geringer als in der Verbindungsbohrung 60. Die Kräfte auf das Schließelement 66 wirken in die gleiche Richtung auf das Schließelement 66.

In dem ersten Steuerraumbereich 72 wirkt die entsprechende erste Druckwirkfläche A₁ auf den Außendurchmesser des Schließelementes 66. Die Wirkrichtung der Kraft auf das Schließelement 66 ist den Kräften auf die Druckwirkflächen A₂ und A₃ entgegengerichtet. Herrscht in dem ersten Steuerraumbereich 72 ein hoher Druck, ist die Kraft auf die erste Druckwirkfläche A₁ größer als die Summe der Kräfte auf die Druckwirkflächen A₂ und A₃. Das Schließelement 66 schließt und dichtet auf den Ventilsitz 68 ab. Herrscht in dem ersten Steuerraumbereich 72 ein niedriger Druck, ist die Kraft auf die erste Druckwirkfläche A₁ kleiner als die Summe der Kräfte auf die zweite und dritte Druckwirkfläche A₂ und A₃. Das Schließelement 66 öffnet und gibt die Verbindungsbohrung 60 und somit den Durchfluss zu dem Airbagsack 22 über die Ablaufbohrung 64 frei.

In der Längsschnittdarstellung in Fig. 5 ist eine in ihrer Wirkungsweise der Ventilanordnung 34 aus Fig. 3 entsprechende Ventilanordnung 34 gezeigt, wobei der Unterschied lediglich darin besteht, dass das Pilotventil 36 in Fig. 3 als stromlos geschlossenes Pilotventil 36 ausgebildet ist und das Pilotventil 36 in Fig. 5 als stromlos offenes Pilotventil 36. Dazu sind die Bauteile des Aktorbereichs 44, insbesondere das Polstück 46, der Anker 48 und die Druckfeder 54 entsprechend angeordnet.

Die Druckfeder 54 in Fig. 3 sorgt dafür, dass das Pilotventil 36 sicher geschlossen ist. Dazu liegt ein Öffnungsdruck P_{öff} des Pilotventiles 36, der durch die Vorspannkraft der Druckfeder 54 bestimmt wird, oberhalb eines Hochdruckes P_{H} des Airbaggases 24 in dem Gasgenerator 30, der bei Aktivieren des Gasgenerators 30 zu erwarten ist.

Bei dem Pilotventil 36 in Fig. 5 ist eine Vorspannkraft der Druckfeder 54 so ausgelegt, dass das Pilotventil 36 in der Öffnungsposition gehalten wird, wobei das Pilotventilelement 40 eine definierte Öffnungsposition einnimmt.

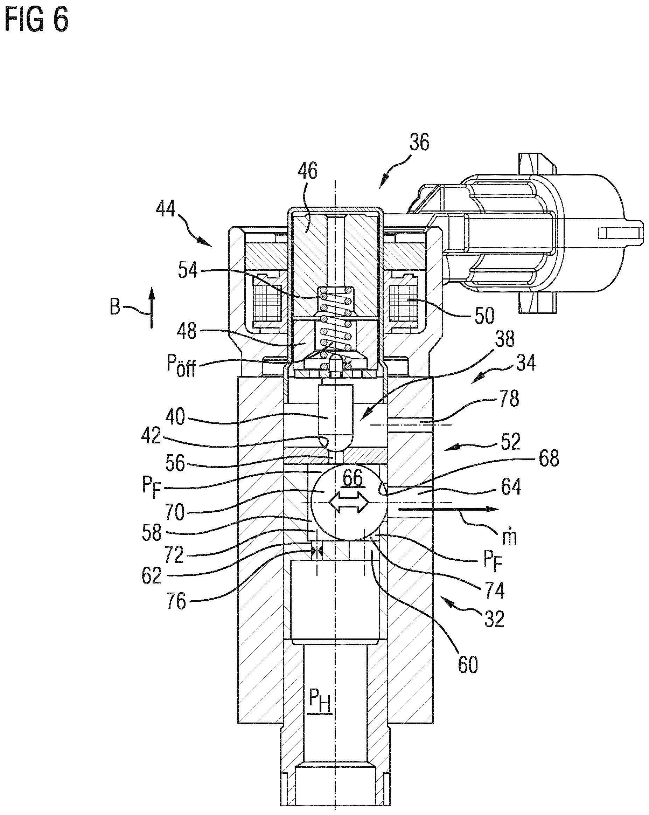

Figs. 6, 7 und 8 zeigen eine zweite Ausführungsform der Ventilanordnung 34, wobei das Pilotventil 36 bzw. der gesamte Aktorbereich 44 entsprechend der ersten Ausführungsform in Figs. 3 bis 5 ausgebildet ist. Lediglich die hydraulische Übersetzungsanordnung 52 unterscheidet sich in der zweiten Ausführungsform von der in der ersten Ausführungsform.

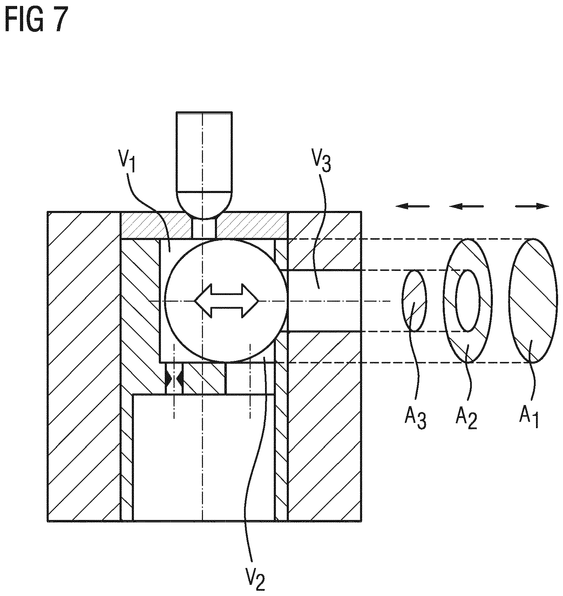

Bei der zweiten Ausführungsform sind die Druckwirkflächen A₁, A₂ und A₃, wie insbesondere in Fig. 7 zu sehen ist, im Vergleich zu der ersten Ausführungsform vertauscht. Dabei wirkt in der Verbindungsbohrung 60 aus dem Gasgenerator 30 die zweite Druckwirkfläche A₂ zwischen dem Außendurchmesser des Schließelementes 66 und dem Sitzdurchmesser des Ventilsitzes 68. Im Bereich des dritten Volumens V₃ wirkt der Druck aus der Ablaufbohrung 64 zu dem Airbagsack 22 bzw. aus dem Airbagsack 22 auf die dritte Druckwirkfläche A₃ des Schließelementes 66. Die zweite Durckwirkfläche A₂ befindet sich zwischen dem Außendurchmesser des Schließelementes 66 und dem Sitzdurchmesser des Ventilsitzes 68. Der Fluiddruck P_{F} in diesem Bereich ist sehr viel geringer als in der Verbindungsbohrung 60. Die Kräfte auf das Schließelement 66 wirken in die gleiche Richtung auf das Schließelement 66.

In dem ersten Steuerraumbereich 72 wirkt die entsprechende erste Druckwirkfläche A₁ auf den Außendurchmesser des Schließelementes 66. Die Wirkrichtung des Fluiddruckes P_{F} auf die erste Druckwirkfläche A₁ ist der Kraft auf die beiden Druckwirkflächen A₂ und A₃ entgegengerichtet. Herrscht in dem ersten Steuerraumbereich 72 ein hoher Fluiddruck P_{F}, ist die Kraft auf die erste Druckwirkfläche A₁ größer als die Summe der Kräfte auf die beiden Druckwirkflächen A₂ und A₃. Das Schließelement 66 schließt und dichtet auf den Ventilsitz 68 ab. Herrscht in dem ersten Steuerraumbereich 72 ein niedriger Fluiddruck P_{F}, ist die Kraft auf die erste Druckwirkfläche A₁ kleiner als die Summe der Kräfte auf die beiden Druckwirkflächen A₂ und A₃. Das Schließelement 66 öffnet und gibt den Durchfluss zu dem Airbagsack 22 frei.

In der zweiten Ausführungsform in der Ventilsitz 68, auf dem das Schließelement 66 in der Schließposition sitzt, nicht an der Verbindungsbohrung 60, sondern an der Ablaufbohrung 64 gebildet.

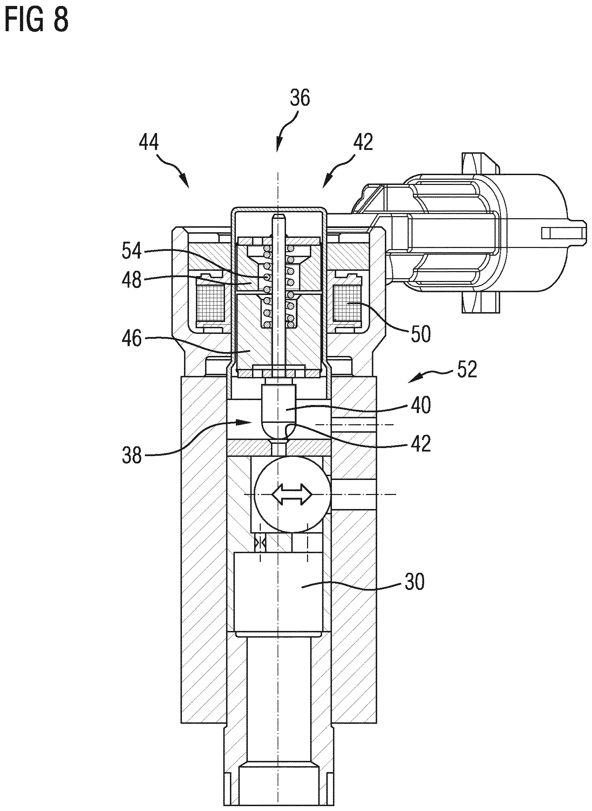

Die Ventilanordnung 34 in Fig. 6 unterscheidet sich von der Ventilanordnung 34 in Fig. 8 lediglich dadurch, dass die Ventilanordnung 34 in Fig. 6 ein stromlos geschlossenes Pilotventil 36 und die Ventilanordnung 34 in Fig. 8 ein stromlos offenes Pilotventil 36 aufweist.

Die oben beschriebenen Ausführungsformen haben den Vorteil, dass die gesamte Ventilanordnung 34 jeweils sehr robust und kompakt aufgebaut werden kann, wobei das Schließelement 66 sehr einfach ausgebildet ist. Durch den Aufbau in der vorgesteuerten Bauform mit Hilfe des Pilotventiles 36 ist es möglich, mit einem relativ kleinen Pilotventil 36 große Masseströme m zu steuern. Durch einen Austausch des Pilotventiles 36 von einer stromlos geöffneten Bauform zu einer stromlos geschlossenen Bauform, dem Einsatz des vorgespannten Pilotventilelementes 40 und dem Druckabgriff vor der massestromlimitierenden Blende 76 kann relativ einfach eine Variantenkonstellation von unterschiedlichen hydraulischen Übersetzungsanordnungen 52 entsprechend dem Sicherheitskonzept des Airbagsystems 18 erzeugt werden.

## Patentansprüche

1. Airbagmodul (16), aufweisend:
- einen Airbagsack (22), der im Betrieb mit einem druckbeaufschlagten Airbaggas (24) befüllt wird;
- einen Gasgenerator (30) zum Bereitstellen des druckbeaufschlagten Airbaggases (24); und
- eine Gaszuführung (32) zwischen Gasgenerator (30) und Airbagsack (22) zum Zuführen des bereitgestellten druckbeaufschlagten Airbaggases (24) von dem Gasgenerator (30) in den Airbagsack (22);
wobei in der Gaszuführung (32) eine Ventilanordnung (34) zum Freigeben eines vordefinierten Massestroms (m) des druckbeaufschlagten Airbaggases (24) aus dem Gasgenerator (30) angeordnet ist,
wobei die Ventilanordnung (34) ein elektrisch ansteuerbares Pilotventil (36) zum Steuern des vordefinierten Massestroms (m) des Airbaggases (24) und eine hydraulische Übersetzungsanordnung (52) zur Vergrößerung einer Hubwirkung des Pilotventils (36) aufweist, wobei die hydraulische Übersetzungsanordnung (52) einen Steuerraum (58) aufweist, der fluidisch über eine Verbindungsbohrung (60) und über eine getrennt von der Verbindungsbohrung (60) angeordnete Drosselbohrung (62) mit dem Gasgenerator (30) verbunden ist, und der fluidisch über eine Ablaufbohrung (64) mit dem Airbagsack (22) verbunden ist, **dadurch gekennzeichnet, dass** in dem Steuerraum (58) ein Schließelement (66) zum Verschließen und Freigeben eines Ventilsitzes (68) in der Verbindungsbohrung (60) oder in der Ablaufbohrung (64) angeordnet ist, wobei das Schließelement (66) als Trennelement (70) ausgebildet ist, das den Steuerraum (58) in einen ersten Steuerraumbereich (72) und in einen von dem ersten Steuerraum (58) getrennten zweiten Steuerraumbereich (74) unterteilt,
wobei eine Zulaufbohrung (56) zu dem Pilotventil (36) eine fluidische Verbindung des Steuerraumes (58) zu dem Pilotventils (36) bildet,
und wobei eine Ablaufbohrung (78) des Pilotventiles eine fluidische Verbindung des Pilotventiles (36) mit dem Airbagsack (22) bildet.

2. Airbagmodul (16) nach Anspruch 1,
**dadurch gekennzeichnet, dass** die Drosselbohrung (62) fluidisch den ersten Steuerraumbereich (72) mit dem Gasgenerator (30) verbindet, wobei das Pilotventil (36) zum Steuern eines Fluiddruckes (P_{F}) des Airbaggases (24) in dem ersten Steuerraumbereich (72) ausgebildet ist.

3. Airbagmodul (16) nach einem der Ansprüche 1 bis 2, **dadurch gekennzeichnet, dass** die Verbindungsbohrung (60) den Gasgenerator (30) mit dem zweitem Steuerraumbereich (74) verbindet.

4. Airbagmodul (16) nach einem der Ansprüche 1 bis 3, **dadurch gekennzeichnet, dass** das Schließelement (66) so ausgebildet ist, dass eine erste Druckwirkfläche (A₁) auf das Schließelement (66) von einer Seite des ersten Steuerraumbereichs (72) größer ist als eine zweite Druckwirkfläche (A₂) von einer Seite der Verbindungsbohrung (60), in der der Ventilsitz (68) gebildet ist, oder von einer Seite der Ablaufbohrung (64), in der der Ventilsitz (68) gebildet ist.

5. Airbagmodul (16) nach einem der Ansprüche 1 bis 4, **dadurch gekennzeichnet, dass** das Pilotventil (36) als stromlos geschlossenes Pilotventil (36) ausgebildet ist und eine Druckfeder (54) aufweist, die ein Pilotventilelement (40) in eine Schließposition (66) auf einen Pilotventilsitz (42) in der Zulaufbohrung (56) vorspannt, wobei die Druckfeder (54) einen Öffnungsdruck (P_{öff}) des Pilotventils (36) insbesondere derart festlegt, dass der Öffnungsdruck (P_{öff}) größer ist als ein durch die Aktivierung des Gasgenerators (30) im Gasgenerator (30) herrschender Hochdruck (P_{H}) des Airbaggases (24).

6. Airbagmodul (16) nach einem der Ansprüche 1 bis 4, **dadurch gekennzeichnet, dass** das Pilotventil (36) als stromlos offenes Pilotventil (36) ausgebildet ist und eine Druckfeder (54) aufweist, die das Pilotventilelement (40) in eine definierte Öffnungsposition vorspannt.

7. Airbagsystem (18), aufweisend:
- ein Airbagmodul (16) nach einem der Ansprüche 1 bis 6; und
- eine Steuereinrichtung (28) zum Ansteuern des Pilotventils (36), wobei die Steuereinrichtung (28) dazu ausgelegt ist, einen Aufprallverlauf zu erkennen und basierend auf dem erkannten Aufprallverlauf einen dem Airbagsack (22) zuzuführenden Massestrom (m) des Airbaggases (24) zu definieren.

## Claims

1. Airbag module (16), comprising:
- an airbag sack (22) which is filled with a pressurized airbag gas (24) during operation;
- a gas generator (30) for providing the pressurized airbag gas (24); and
- a gas feed (32) between the gas generator (30) and the airbag sack (22) for feeding the provided pressurized airbag gas (24) from the gas generator (30) into the airbag sack (22);
a valve arrangement (34) for releasing a predefined mass flow (***ṁ***) of the pressurized airbag gas (24) from the gas generator (30) being arranged in the gas feed (32),
the valve arrangement (34) comprising an electrically actuable pilot valve (36) for controlling the predefined mass flow (***ṁ***) of the airbag gas (24) and a hydraulic intensifier arrangement (52) for increasing a lift action of the pilot valve (36), the hydraulic intensifier arrangement (52) comprising a control space (58) which is connected fluidically to the gas generator (30) via a connecting bore (60) and via a throttle bore (62) arranged separately from the connecting bore (60), and which is connected fluidically to the airbag sack (22) via an outflow bore (64),
**characterized in that**
a closing element (66) for closing and releasing a valve seat (68) in the connecting bore (60) or in the outflow bore (64) is arranged in the control space (58), the closing element (66) being configured as a dividing element (70) which divides the control space (58) into a first control space region (72) and into a second control space region (74) which is separate from the first control space (58),
an inflow bore (56) to the pilot valve (36) forming a fluidic connection of the control space (58) to the pilot valve (36),
and an outflow bore (78) of the pilot valve forming a fluidic connection of the pilot valve (36) to the airbag sack (22).

2. Airbag module (16) according to Claim 1, **characterized in that** the throttle bore (62) connects the first control space region (72) fluidically to the gas generator (30), the pilot valve (36) being configured to control a fluid pressure (P_{F}) of the airbag gas (24) in the first control space region (72).

3. Airbag module (16) according to either of Claims 1 and 2,
**characterized in that** the connecting bore (60) connects the gas generator (30) to the second control space region (74) .

4. Airbag module (16) according to one of Claims 1 to 3,
**characterized in that** the closing element (66) is configured in such a way that a first active pressure area (A₁) on the closing element (66) from a side of the first control space region (72) is greater than a second active pressure area (A₂) from a side of the connecting bore (60), in which the valve seat (68) is formed, or from a side of the outflow bore (64), in which the valve seat (68) is formed.

5. Airbag module (16) according to one of Claims 1 to 4,
**characterized in that** the pilot valve (36) is configured as a normally closed pilot valve (36) and comprises a compression spring (54) which prestresses a pilot valve element (40) into a closed position (66) onto a pilot valve seat (42) in the inflow bore (56), the compression spring (54) specifying an opening pressure (P_{öff}) of the pilot valve (36), in particular, in such a way that the opening pressure (P_{öff}) is greater than a high pressure (P_{H}) of the airbag gas (24), which high pressure (P_{H}) prevails in the gas generator (30) as a result of the activation of the gas generator (30).

6. Airbag module (16) according to one of Claims 1 to 4,
**characterized in that** the pilot valve (36) is configured as a normally open pilot valve (36) and comprises a compression spring (54) which prestresses the pilot valve element (40) into a defined open position.

7. Airbag system (18), comprising:
- an airbag module (16) according to one of Claims 1 to 6; and
- a control device (28) for actuating the pilot valve (36), the control device (28) being designed to detect an impact process and, based on the detected impact process, to define a mass flow (***ṁ***) of the airbag gas (24) which is to be fed to the airbag sack (22).

## Revendications

1. Module d'airbag (16), comprenant :
- un sac d'airbag (22) qui est rempli, en fonctionnement, d'un gaz d'airbag sous pression (24) ;
- un générateur de gaz (30) destiné à produire le gaz d'airbag sous pression (24) ; et
- une alimentation en gaz (32) située entre le générateur de gaz (30) et le sac d'airbag (22) et destinée à amener le gaz d'airbag sous pression produit (24) du générateur de gaz (30) jusque dans le sac d'airbag (22) ;
un ensemble à soupape (34) destiné à libérer un débit massique prédéfini (m) du gaz d'airbag sous pression (24) du générateur de gaz (30) étant disposé dans l'alimentation en gaz (32),
l'ensemble à soupape (34) comportant une soupape pilote (36) à commande électrique destinée à commander le débit massique prédéfini (m) du gaz d'airbag (24) et un ensemble de transmission hydraulique (52) destiné à augmenter un effet de levage de la soupape pilote (36), l'ensemble de transmission hydraulique (52) comportant une chambre de commande (58) qui est reliée fluidiquement au générateur de gaz (30) par un alésage de liaison (60) et par un alésage d'étranglement (62) disposé séparément de l'alésage de liaison (60), et qui est reliée fluidiquement au sac d'airbag (22) par un alésage de sortie (64),
**caractérisé en ce que**
dans la chambre de commande (58), un élément de fermeture (66) destiné à fermer et libérer un siège de soupape (68) est disposé dans l'alésage de liaison (60) ou dans l'alésage de sortie (64), l'élément de fermeture (66) étant conçu comme un élément de séparation (70) qui divise la chambre de commande (58) en une première zone de chambre de commande (72) et une deuxième zone de chambre de commande (74) séparée de la première chambre de commande (58),
un alésage d'admission (56) menant à la soupape pilote (36) formant une liaison fluidique entre la chambre de commande (58) et la soupape pilote (36), et
un alésage de sortie (78) de la soupape pilote formant une liaison fluidique entre la soupape pilote (36) et le sac d'airbag (22).

2. Module d'airbag (16) selon la revendication 1, **caractérisé en ce que** l'alésage d'étranglement (62) relie fluidiquement la première zone de chambre de commande (72) au générateur de gaz (30), la soupape pilote (36) étant conçue pour commander une pression de fluide (P_{F}) du gaz d'airbag (24) dans la première zone de chambre de commande (72).

3. Module d'airbag (16) selon l'une des revendications 1 à 2, **caractérisé en ce que** l'alésage de liaison (60) relie le générateur de gaz (30) à la deuxième zone de chambre de commande (74).

4. Module d'airbag (16) selon l'une des revendications 1 à 3, **caractérisé en ce que** l'élément de fermeture (66) est conçu de telle sorte qu'une première surface de pression active (A₁) sur l'élément de fermeture (66) d'un côté de la première zone de la chambre de commande (72) soit plus grande qu'une deuxième surface de pression active (A₂) d'un côté de l'alésage de liaison (60) dans lequel le siège de soupape (68) est formé, ou d'un côté de l'alésage de sortie (64) dans lequel le siège de soupape (68) est formé.

5. Module d'airbag (16) selon l'une des revendications 1 à 4, **caractérisé en ce que** la soupape pilote (36) est conçue comme une soupape pilote (36) qui est fermée hors tension et comporte un ressort de compression (54) qui précontraint un élément de soupape pilote (40) dans une position fermée (66) sur un siège de soupape pilote (42) situé dans l'alésage d'admission (56), le ressort de compression (54) définissant une pression d'ouverture (P_{öff}) de la soupape pilote (36) en particulier de telle sorte que la pression d'ouverture (P_{öff}) soit supérieure à une pression élevée (P_{H}) du gaz d'airbag (24) qui règne dans le générateur de gaz (30) en raison de l'activation du générateur de gaz (30).

6. Module d'airbag (16) selon l'une des revendications 1 à 4, **caractérisé en ce que** la soupape pilote (36) est conçue comme une soupape pilote (36) qui est ouverte hors tension et comporte un ressort de compression (54) qui précontraint l'élément de soupape pilote (40) dans une position d'ouverture définie.

7. Système d'airbag (18), comprenant :
- un module d'airbag (16) selon l'une des revendications 1 à 6 ; et
- un dispositif de commande (28) destiné à commander la soupape pilote (36), le dispositif de commande (28) étant conçu pour détecter un profil d'impact et définir, sur la base du profil d'impact détecté, un débit massique (m) du gaz d'airbag (24) à amener à l'airbag (22).
